# FASCICULE DE BREVET EUROPEEN

(11) **EP 4 096 864 B1**
(45) Date de publication et mention de la délivrance du brevet: **03.09.2025**
(21) Numéro de dépôt: 21706638.0
(22) Date de dépôt: 21.01.2021
(51) Int. Cl.: B23Q 1/62, B23Q 9/00, B23Q 9/02, B27C 9/00

(54) **DISPOSITIF D'USINAGE NUMÉRIQUE PORTATIF D'UNE PIÈCE À USINER**
PORTABLE NUMERICAL MACHINING DEVICE FOR A WORKPIECE
TRAGBARE NUMERISCHE BEARBEITUNGSVORRICHTUNG FÜR EIN WERKSTÜCK

(30) Priorité: 27.01.2020 FR 2000758
(43) Date de publication de la demande: 07.12.2022
(73) Titulaire: Epur, 11140 Rodome (FR)
(72) Inventeur: GIUSTI, Pierre, 11340 Espezel (FR); VINET, Denis, 31260 Belbeze en Comminges (FR); CLAIR, Olivier, 11140 Rodome (FR)
(74) Mandataire: Bringer IP
(86) Numéro de dépôt international: PCT/FR2021/050105
(87) Numéro de publication internationale: WO 2021/152239

(56) Documents cités:
- WO-A2-2004/069501
- US-A- 3 700 344
- US-A- 5 494 089

## Description

### Domaine technique de l'invention

L'invention concerne un dispositif d'usinage numérique portatif d'une pièce à usiner, telle qu'une pièce en bois. L'invention concerne notamment un dispositif d'usinage numérique manuportable destiné aux métiers de la charpente.

### Arrière-plan technologique

Il existe deux grandes familles de dispositifs d'usinage permettant de réaliser un usinage d'une pièce telle qu'une pièce en bois.

La première famille est constituée par les dispositifs manuels équipés chacun d'un outil spécifique, tel qu'une scie, un rabot, etc. et qui sont directement manipulés par un opérateur pour usiner la pièce de bois. En d'autres termes, c'est l'opérateur qui déplace l'outil d'usinage par rapport à la pièce à usiner et qui exerce la force permettant la découpe du bois. Cette famille de dispositifs présente l'avantage de pouvoir usiner les pièces en bois directement sur le lieu d'utilisation de la pièce. En revanche, ces dispositifs présentent l'inconvénient d'imposer à l'opérateur de manipuler directement l'outil d'usinage, ce qui peut occasionner des blessures. En outre, l'usinage est moins précis qu'avec une machine à commande numérique. Enfin, c'est à l'opérateur d'exercer la force d'usinage, éventuellement assistée d'un moteur électrique dans le cadre des dispositifs manuels électroportatifs, ce qui peut être physiquement éreintant.

La deuxième famille est constituée par les dispositifs d'usinage à commande numérique qui comprennent chacun un châssis qui repose sur le sol du lieu d'usinage, un outil de coupe monté sur le châssis, des moyens d'entrainement automatique de l'outil de coupe et des moyens de réception de la pièce en bois à usiner. L'outil de coupe peut être de différents types. Il peut s'agir par exemple d'une fraiseuse à bois, d'une scie circulaire, d'un rabot, etc.

Les dispositifs d'usinage de cette famille présentent l'inconvénient d'être relativement encombrant et de nécessiter le déplacement de la pièce en bois vers le dispositif d'usinage. La pièce en bois, une fois usinée, peut ensuite être déplacée vers son lieu d'installation, comme par exemple une charpente. En revanche, ces dispositifs d'usinage présentent l'avantage de permettre la réalisation d'usinage précis, de limiter les blessures dans la mesure où l'outil n'est pas directement manipulé par l'opérateur et enfin de limiter la fatigue dans la mesure où l'outil de coupe est entrainé directement par un moteur, qui est en général un moteur électrique, et non plus par la force manuelle de l'opérateur.

Le document WO2004069501 décrit un dispositif de perçage portatif destiné par exemple à former des mortaises dans des pièces en bois.

Ce document décrit en particulier un dispositif comprenant des mâchoires allongées destinées à venir serrer entre elles une pièce en bois à percer, des guides solidaires chacun d'une mâchoire et s'étendant le long des mâchoires, des traverses montées sur les guides portant une plateforme mobile par rapport aux traverses qui forme une base de réception d'un boîtier de perçage. Dans ce document, le dépacement de l'outil de perçage est obtenu par le déplacement de la plateforme par rapport au guide, c'est-à-dire par les moyens de liaison entre le boitier de perçage et les machoires.

Le déposant a déjà proposé, notamment dans son brevet FR3050135, une machine-outil qui forme une nouvelle famille de dispositifs d'usinage. La machine-outil proposée est un dispositif portatif d'usinage automatisé d'une pièce en bois. Un tel dispositif comprend un châssis qui vient se fixer directement sur la pièce en bois à usiner et une tête d'usinage à commande numérique logée dans le châssis. Cet outil présente donc la particularité de permettre l'utilisation d'un moyen d'usinage à commande numérique directement sur le lieu d'installation finale de la pièce en bois. Un tel dispositif permet également d'améliorer la mobilité du charpentier dans son atelier le cas échéant. En d'autres termes, c'est le dispositif qui est déplacé vers la pièce à usiner et non l'inverse. Un tel dispositif est donc particulièrement maniable et adapté à tous les types de constructions en bois.

Le déposant a cherché à améliorer son dispositif d'usinage portatif pour le rendre plus maniable et accessible à un grand nombre d'utilisateurs.

### Objectifs de l'invention

L'invention vise ainsi à fournir un dispositif d'usinage d'une pièce, notamment une pièce en bois, qui soit maniable et portatif.

L'invention vise aussi à fournir, dans au moins un mode de réalisation de l'invention, un dispositif d'usinage qui permette un montage rapide et ergonomique du dispositif sur la pièce, notamment en bois, à usiner.

L'invention vise en particulier à fournir, dans au moins un mode de réalisation de l'invention, un dispositif d'usinage qui puisse être utilisé par un seul opérateur, sans difficultés particulières.

L'invention vise aussi à fournir, dans au moins un mode de réalisation de l'invention, un dispositif d'usinage qui puisse assurer la sécurité de l'opérateur utilisant un tel dispositif d'usinage.

L'invention vise aussi à fournir, dans au moins un mode de réalisation de l'invention, un dispositif d'usinage qui puisse se fixer sur n'importe quelle partie de la pièce, notamment en bois, à usiner (notamment en bout de poutre ou sur le chant de la poutre).

### Exposé de l'invention

Pour ce faire, l'invention concerne un dispositif d'usinage portatif - notamment manuportable - à commande numérique d'une pièce à usiner comprenant un module d'usinage comprenant :
- au moins une tête d'usinage portant un outil d'usinage,
- des moyens de déplacement de ladite tête d'usinage selon au moins deux axes perpendiculaires entre eux,
- une unité de commande numérique configurée pour pourvoir commander lesdits moyens de déplacement de ladite tête d'usinage.

Le dispositif d'usinage selon l'invention est caractérisé en ce qu'il comprend en outre un module de bridage dudit module d'usinage sur ladite pièce en bois à usiner, ledit module de bridage comprenant :
- des moyens de fixation amovible dudit module de bridage sur ladite pièce en bois à usiner,
- des moyens de montage amovible dudit module d'usinage sur ledit module de bridage.

Le dispositif d'usinage selon l'invention présente donc la particularité d'être composé de deux parties principales : le module de bridage et le module d'usinage, là où les dispositifs de l'art antérieur étaient formés d'un bloc d'un seul tenant.

Un dispositif d'usinage selon l'invention est donc portatif, notamment manuportable, c'est-à-dire qu'il peut être porté à la main par un opérateur.

Rien n'empeche néanmoins de prévoir un chariot de manutention pour faciliter le déplacement du module d'usinage vers le module de bridage, voire du module de bridage vers la pièce à usiner.

Cette structure particulière du dispositif d'usinage selon l'invention permet donc de simplifier et d'alléger les opérations d'installation du dispositif d'usinage sur la pièce en bois à usiner. En particulier, le dispositif d'usinage selon l'invention permet qu'un opérateur fixe dans un premier temps le module de bridage sur la pièce à usiner au niveau de la zone d'usinage puis vienne monter le module d'usinage sur le module de bridage.

Il est également possible de monter le module d'usinage sur le module de bridage préalablement à la fixation du module de bridage sur la pièce à usiner.

Un autre avantage du dispositif selon l'invention est de pouvoir utiliser le module de bridage fixé sur une pièce à usiner pour y monter d'autres équipements que le module d'usinage. Ainsi, le module de bridage fait office de platine de fixation d'un équipement de traitement de la pièce. Il est également possible d'utiliser le module d'usinage indépendamment du module de bridage et de le coupler à d'autres modules de réception, tels que par exemple une embase fixe permettant ainsi de former une machine-outil stationnaire ou d'autres modules de bridage configurés pour être fixés à différents types de pièces caractérisées par leur matériaux, formes, agencements, etc.

En outre, le dispositif d'usinage selon l'invention comprend des moyens de déplacement de ladite tête d'usinage selon au moins 3 axes perpendiculaires entre eux, et une unité de commande numérique configurée pour pourvoir commander lesdits moyens de déplacement de ladite tête d'usinage.

L'usinage de la pièce est donc réalisé de manière automatisée, ce qui libère l'opérateur des contraintes de déplacement de l'outil d'usinage. Un tel dispositif limite donc les risques de blessures de l'opérateur.

Le dispositif d'usinage selon l'invention est particulièrement destiné à l'usinage de pièces en bois. Cela étant, un dispositif selon l'invention peut également être utilisé pour usiner d'autres types de pièces et notamment des pièces en matériau plastique, des pièces bétonnées, des pièces métalliques et d'une manière générale tous types de pièce nécessitant un usinage sur site. Le mode de fixation du dispositif d'usinage selon l'invention est indépendant du matériau de la pièce à usiner. C'est la tête d'usinage qui doit être adaptée au type de matériau de la pièce à usiner.

Selon l'invention, la mobilité de l'outil d'usinage n'est pas obtenue par un déplacement du module d'usinage par rapport au module de bridage au niveau des moyens de fixation amovible, mais est réalisée au sein du module d'usinage. Une fois monté sur le module de bridage, le module d'usinage est fixe par rapport au module de bridage.

Avantageusement et selon l'invention, ledit module de bridage comprend un châssis plan adapté pour pouvoir venir au moins partiellement en appui contre un chant de ladite pièce à usiner, ledit châssis comprenant en outre une ouverture centrale destinée à permettre le passage de ladite tête d'usinage sur commande de ladite unité de commande numérique lorsque ledit module d'usinage est monté sur ledit module de bridage.

Selon cette variante avantageuse, le module de bridage présente un châssis plan, ce qui permet de fixer le module de bridage contre un chant plat de la pièce à usiner. Un tel module permet également la fixation en bout de pièce ou sur la face d'une pièce à usiner. En outre, le châssis présente une ouverture qui permet de laisser passer l'outil d'usinage pour venir travailler la pièce sur laquelle le module de bridage est fixé.

Avantageusement et selon l'invention, lesdits moyens de fixation amovible dudit module de bridage sur ladite pièce à usiner comprennent des moyens de serrage formés de moyens de positionnement et de pré-serrage du module de bridage sur la pièce à usiner et des moyens de serrage final du module de bridage sur la pièce à usiner.

Un dispositif selon cette variante avantageuse est ergonomique et permet une installation du dispositif sur une pièce à usiner par un seul opérateur.

En particulier, l'opérateur peut positionner le module de bridage et actionner les moyens de pré-serrage du module de bridage, puis ensuite les moyens de serrage final, qui permettent de maintenir rigidement le module de bridage sur la pièce à usiner.

Avantageusement et selon l'invention, lesdits moyens de pré-serrage comprennent une mâchoire formée de deux tables s'étendant parallèlement l'une de l'autre, respectivement fixe et mobile par rapport audit châssis du module de bridage, ladite table mobile étant montée coulissante sur ledit châssis et reliée à des moyens d' actionnement de ladite table mobile pour permettre son déplacement vers ladite table fixe en enserrant entre elles ladite pièce en bois à usiner.

Selon cette variante avantageuse, les moyens de pré-serrage comprennent une mâchoire formée de deux tables, respectivement fixe et mobile par rapport au châssis. La table fixe est mobile en coulissement par rapport à la table fixe.

Avantageusement et selon l'invention, lesdits moyens d'actionnement de ladite table mobile comprennent :
- des rainures latérales s'étendant de part et d'autre du châssis du module de bridage,
- des patins de guidage linéaire portés par les extrémités latérales de ladite table mobile et logés en coulissement dans lesdites rainures latérales,
- une courroie reliant chacun des deux patins de guidage à une poignée de manœuvre portée par ledit châssis et configurée pour pouvoir passer d'une première position dans laquelle ladite courroie s'étend de manière à maintenir ladite table mobile à une distance prédéterminée de ladite table fixe, à au moins une deuxième position dans laquelle ladite courroie exerce sur ladite table mobile une action de traction vers ladite table fixe de manière à pouvoir enserrer ladite pièce en bois entre lesdites tables.

Un dispositif selon cette variante avantageuse permet d'actionner le déplacement de la table mobile par rapport à la table fixe par un mécanisme de guidage linéaire. Ce mécanisme de guidage linéaire comprend une courroie, une poignée de manœuvre et des patins de guidage portés par les extrémités latérales de la table mobile et logés dans des rainures de guidage latérales du châssis du module de bridage. Un tel mécanisme est exempt d'arc-boutement sur les rails de guidage et permet le coulissement de la table mobile par rapport à la table fixe par une action sur la poignée de manœuvre par un opérateur.

Selon une variante, la distance prédéterminée correspond à la distance maximale d'écartement entre les tables fixe et mobile. En d'autres termes et selon cette variante avantageuse, dans ladite première position, la courroie est détendue de sorte que la table mobile reliée à ladite courroie s'écarte de la table fixe par gravité en présentant un écartement est maximal.

Avantageusement et selon l'invention, ladite poignée de manœuvre est montée mobile en rotation sur ledit châssis selon un axe perpendiculaire audit châssis, et ladite courroie est une courroie élastique qui relie chaque patin de guidage et ladite poignée de manœuvre, en passant par une poulie de renvoi solidaire dudit châssis et présentant un axe parallèle et distant de l'axe de rotation de ladite poignée.

Cette structure avantageuse met en œuvre une poulie de renvoi dont l'axe est décalé par rapport à l'axe de pivotement de la poignée de manœuvre, de manière à pouvoir faire varier la longueur apparente de la courroie entre la poignée et les patins de guidage par une simple rotation de la poignée de manœuvre autour de l'axe de rotation de la poignée.

Selon cette variante, la courroie est élastique et peut par exemple être formée par un sandow. Ainsi, c'est l'élasticité de la courroie qui permet à la fois une course importante de la table mobile mais également un serrage suffisant de la pièce à usiner, quelle que soit l'ouverture de la mâchoire (c'est-à-dire l'écartement qui sépare la table fixe de la table mobile et qui dépend de l'épaisseur de la pièce à usiner).

Avantageusement et selon l'invention, ledit module de bridage comprend en outre des pièces de friction logées sur le pourtour dudit châssis qui enserrent ladite courroie élastique.

Selon cette variante avantageuse, le coulissement de la courroie élastique se fait par l'intermédiaire de pièces de friction.

La poulie de renvoi peut par exemple comprendre deux réas montés sur le châssis qui coopère avec un réa monté sur la poignée de manœuvre de manière à former un chemin qui, par exemple, part d'un premier patin de bridage, passe par un réa porté par le châssis, puis par un réa porté par la poignée de manœuvre, puis par un autre réa porté par le châssis et enfin relie le second patin de bridage.

Avantageusement et selon l'invention, lesdits moyens de serrage final comprennent au moins un serre-joint configuré pour pouvoir s'étendre de part et d'autre de ladite pièce à usiner, une fois le module de bridage fixé sur ladite pièce en bois, en exerçant des forces opposées sur lesdites tables fixe et mobile des moyens de pré-serrage.

Un tel moyen de serrage final est particulièrement simple à mettre en œuvre par un opérateur seul et peut s'adapter à différents types de pièce à usiner (taille, matériau, etc.). Un tel moyen de serrage final est donc à la fois versatile et robuste pour assurer le maintien nécessaire du module de bridage sur la pièce à usiner.

Avantageusement et selon l'invention, le dispositif comprend en outre des moyens de référencement dudit dispositif d'usinage par rapport à ladite pièce à usiner.

Ces moyens de référencement permettent de référencer le module d'usinage par rapport à la pièce à usiner afin d'assurer la précision de l'usinage.

Avantageusement et selon cette variante, les moyens de référencement comprennent une fenêtre de visualisation équipée d'un repère destiné à être positionné par un opérateur en regard d'un repère visuel marqué sur ladite pièce en bois à usiner.

Un dispositif selon cette variante permet simplement à un opérateur d'aligner la pièce à usiner, sur laquelle un trait d'alignement est tracé, avec un repère porté par la fenêtre de visualisation.

Avantageusement et selon cette variante, ladite fenêtre de visualisation est portée par la table fixe des moyens de serrage.

Avantageusement et selon l'invention, lesdits moyens de montage amovible dudit module d'usinage sur ledit module de bridage comprennent :
- un épaulement périphérique ménagé sur ledit module de bridage conformé au pourtour du module d'usinage de manière à former un logement de réception dudit module d'usinage,
- des taquets pivotants de verrouillage montés sur ledit module de bridage et configurés pour pouvoir passer d'une première position dans laquelle le module d'usinage peut être inséré librement dans ledit logement de réception formé par ledit épaulement périphérique à une deuxième position dans laquelle les taquets pivotants de verrouillage sont pivotés et assurent le placage dudit module d'usinage contre ledit module de bridage et empêchent le délogement dudit module d'usinage.

Un dispositif selon cette variante avantageuse permet de monter et fixer le module d'usinage sur le module de bridage, une fois ce dernier fixé sur la pièce à usiner. Bien entendu, d'autres moyens de fixation peuvent être utilisés pour monter et fixer le module d'usinage sur le module de bridage sans modifier sensiblement les effets de l'invention.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en perspective d'un dispositif d'usinage selon un mode de réalisation de l'invention.
[Fig. 2] est une vue schématique en perspective du dispositif d'usinage de la figure 1 monté au bout d'une pièce en bois à usiner.
[Fig. 3] est une vue schématique en perspective du dispositif d'usinage de la figure 1 monté sur le chant d'une pièce en bois à usiner.
[Fig. 4] est une vue schématique en perspective du module de bridage du dispositif d'usinage de la figure 1.
[Fig. 5] est une vue schématique en perspective d'un détail de la figure 4.
[Fig. 6] est une vue schématique en perspective d'un détail de la figure 3 illustrant les moyens de positionnement du module de bridage.

### Description détaillée d'un mode de réalisation de l'invention

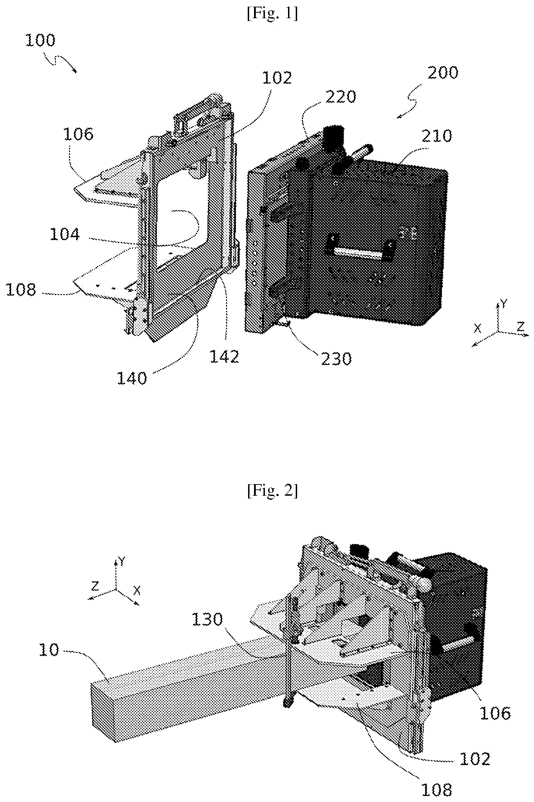

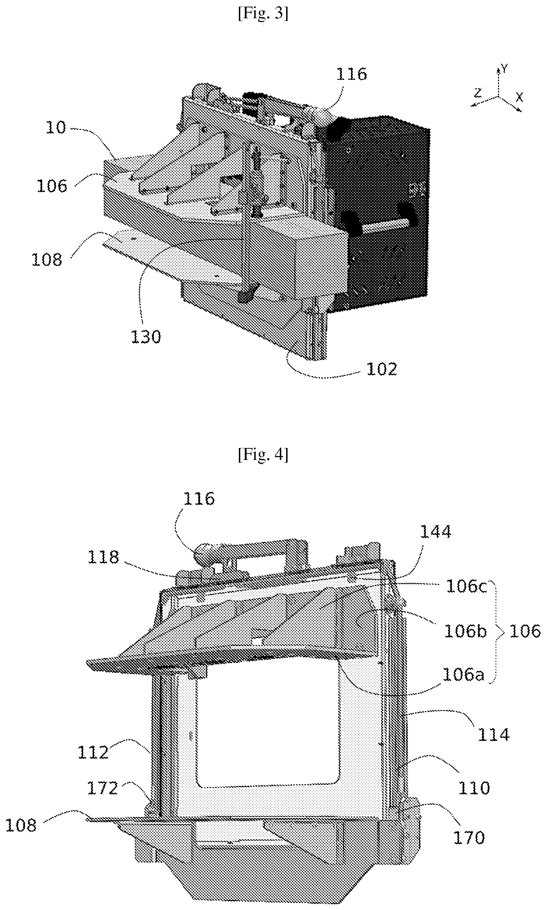

Sur les figures, les échelles et les proportions ne sont pas strictement respectées et ce, à des fins d'illustration et de clarté. Dans toute la description détaillée qui suit en référence aux figures, sauf indication contraire, chaque élément du dispositif d'usinage est décrit tel qu'il est agencé lorsque le dispositif d'usinage dont il fait partie est monté sur une pièce à usiner. Cette configuration est notamment représentée sur les figures 2 et 3. Les éléments identiques, similaires ou analogues sont désignés par les mêmes références sur toutes les figures.

En outre, le trièdre X, Y, Z définit les trois directions de l'espace selon lesquelles la tête d'usinage peut être déplacée. Sur les figures, la direction Y est définie par la gravité, la direction Z est définie par la perpendiculaire à la gravité et au plan du châssis du module de bridage et la direction X est la perpendiculaire à la direction Y et à la direction Z.

La figure 1 illustre de manière schématique un dispositif d'usinage selon un mode de réalisation de l'invention.

Le dispositif comprend un module de bridage 100 configuré pour pouvoir être fixé sur une pièce 10 à usiner par l'intermédiaire de moyens de fixation amovible, décrits ultérieurement ; et un module d'usinage 200 destiné à être monté sur le module de bridage 100 par l'intermédiaire de moyens de montage amovible, décrits ultérieurement.

La figure 2 illustre schématiquement l'ensemble formé du module de bridage 100 et du module d'usinage 200 monté sur une pièce en bois 10 à usiner.

Comme décrit ultérieurement, ce montage est réalisé d'une part en fixant le module de bridage 100 sur la pièce en bois 10 à usiner, puis en montant le module d'usinage 200 sur le module de bridage 100.

La figure 2 illustre un montage du dispositif d'usinage sur le bout d'une poutre 10 en bois et la figure 3 illustre un montage du dispositif d'usinage sur le chant d'une poutre 10 en bois.

Dans la suite, on va décrire de manière plus détaillée la structure et le fonctionnement du module d'usinage 100 et du module de bridage 100.

Le module d'usinage 200 comprend, et tel que représenté sur la figure 1, un châssis 210 logeant une tête d'usinage non représentée sur les figures à des fins de clarté. Le châssis est par exemple formé en tôle et présente une pluralité d'ouvertures de ventilation. La tête d'usinage comprend par exemple un porte-outil configuré pour pouvoir recevoir un outil d'usinage tel qu'une fraise à bois. La tête d'usinage est montée mobile par rapport au châssis 210 et à l'intérieur de ce dernier, par exemple par l'intermédiaire de glissières à billes ou de tous moyens équivalents. Le déplacement de la tête d'usinage sur chaque axe est par exemple assuré par un moteur pas à pas configuré pour faire tourner une vis sans fin. Le principe de fonctionnement du module d'usinage en tant que tel est par exemple celui décrit dans la demande EP3235612 au nom du demandeur.

Le module d'usinage 200 comprend par ailleurs une unité de commande numérique, non représentée sur les figures, et configurée pour pouvoir commander les moteurs de déplacement de la tête d'usinage. Cette unité de commande est par exemple pilotée par une télécommande à écran tactile destinée à être manipulée par l'opérateur commandant l'usinage de la pièce en bois 10 par le dispositif d'usinage selon l'invention.

Enfin, le module d'usinage 200 comprend une platine d'interface 220 boulonnée sur le châssis 210 par l'intermédiaire d'ailettes 230 qui s'étendent de part et d'autre du châssis 210. Cette platine 220 est configurée pour venir se loger dans un logement de réception 140 ménagé dans le module de bridage 100 tel que décrit ultérieurement.

Le module de bridage 100 comprend un châssis 102 globalement rectangulaire. Le châssis 102 comprend un épaulement périphérique 142 qui délimite le logement 140 de réception de la platine d'interface 220 du module d'usinage. En d'autres termes, le logement de réception 140 délimité par l'épaulement périphérique 142 est conformé à la platine d'interface 220 du module d'usinage 200.

Le châssis 102 présente également une ouverture 104 permettant le passage de l'outil d'usinage du module d'usinage 200 lorsque le module d'usinage est monté et solidarisé sur le module de bridage.

Le module de bridage 100 comprend également deux tables 106, 108 s'étendant parallèlement l'une à l'autre et délimitant une mâchoire de serrage de la pièce en bois 10 à usiner. De préférence et tel que représenté sur les figures, la table fixe 106 est la table supérieure et la table mobile 108 est la table inférieure. Bien entendu, selon un autre mode de réalisation, la table mobile peut être la table supérieure et la table fixe la table inférieure.

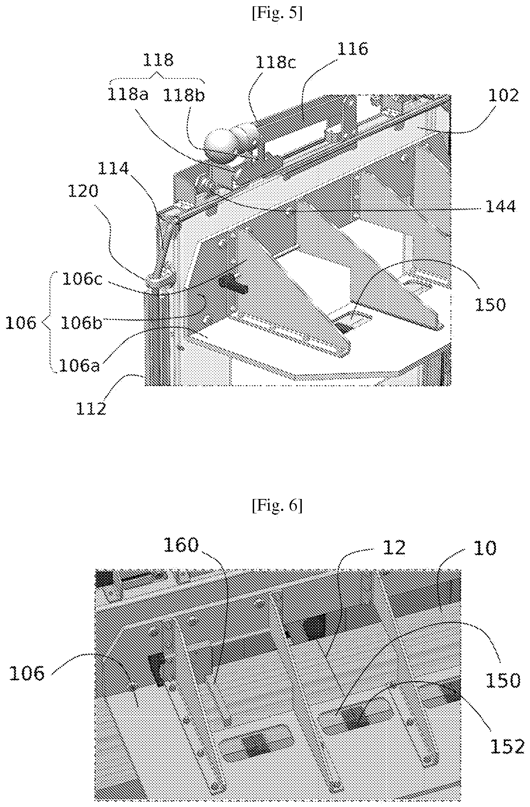

Chaque table est par exemple formée d'une pièce en forme de L. Plus particulièrement, si l'on considère la table 106 représentée sur les figures 4 et 5, la base du L forme une paroi de serrage 106a et la partie longitudinale du L forme une paroi de fixation 106b au châssis 102. Par ailleurs, la table 106 comprend une pluralité d'équerres 106c qui relient la paroi de serrage 106a à la paroi de fixation 106b pour rigidifier la table de serrage.

La table 108 présente, selon le mode de réalisation des figures, une structure en L inversé. La partie longitudinale du L forme une paroi de guidage reliée aux patins de guidage décrits ultérieurement et la base du L forme une paroi de serrage destinée à venir enserrer la pièce à usiner en coopération avec la paroi de serrage de la table fixe décrite précédemment.

Bien entendu, les tables peuvent présenter d'autres structures pour former la mâchoire de serrage des moyens de pré-serrage.

Le module de bridage comprend également une fenêtre de visualisation 150, visible notamment sur les figures 5 et 6, équipée d'un repère 152 destiné à être positionné par un opérateur en regard d'un repère visuel 12 marqué sur la pièce 10 à usiner. Ce repère de positionnement peut par exemple être un repère gradué pour permettre un positionnement spécifique du module de bridage par rapport au trait de référence dessiné sur la pièce à usiner.

Cette fenêtre de visualisation 150 est, selon le mode de réalisation des figures, portée par la table fixe 106 des moyens de pré-serrage. Ainsi, selon ce mode de réalisation, la fenêtre de visualisation est une portion transparente de la table fixe, et plus particulièrement de la paroi 106a de la table fixe.

Selon un mode réalisation préférentiel, le module de bridage peut aussi comprendre une butée mécanique latérale escamotable 160 configurée pour permettre le référencement et le blocage latéral du module de bridage sur le chant de la pièce en bois à usiner lors de l'agencement du module de bridage sur le bout de la pièce à usiner.

En outre et tel que représenté également sur les figures 4 et 5, le châssis 102 comprend deux rainures latérales 110 et 112.

Chaque rainure latérale reçoit un patin de guidage 170, 172 relié solidairement à chaque extrémité latérale de la table 108 mobile. Chaque patin est configuré pour pouvoir coulisser dans la rainure latérale du châssis 102.

Le module de bridage 100 comprend également une courroie élastique 114 qui relie chacun des deux patins de guidage à une poignée de manœuvre 116, montée mobile par rapport au châssis 102 selon un axe perpendiculaire au plan du châssis, en passant par une poulie de renvoi 118 solidaire du châssis 102 et présentant un axe parallèle et distant de l'axe de rotation de ladite poignée.

La combinaison des rainures latérales, des patins de guidage, de la courroie élastique, de la poignée de manœuvre et de la poulie de renvoi forme des moyens d'actionnement des moyens de pré-serrage du module de bridage formés par la table fixe 106 et par la table mobile 108.

En particulier, par le pivotement de la poignée de manœuvre 116, l'opérateur exerce une traction sur la courroie élastique qui entraine les patins de guidage en coulissement dans les rainures latérales et donc le serrage de la mâchoire formée par les tables 106 et 108.

Comme cela apparait sur la figure 5, la poulie de renvoi 118 est formée de deux réas 118a et 118b qui coopèrent avec un réa 118c porté par la poignée 116.

Cela permet de faire circuler la courroie 114, depuis un premier patin de bridage, puis par le réa 118a, puis par le réa 118c porté par la poignée de manœuvre 116, puis par le réa 118b, jusqu'à rejoindre le second patin de bridage de la table 108. Ainsi, on comprend bien que lors du pivotement de la poignée 116, la courroie va s'étirer du fait du déplacement du réa 118c par rapport aux réas 118a, 118b portés par le châssis, et ainsi entrainer le déplacement de la table mobile par coulissement des patins de guidage dans les rainures latérales.

Tel que représenté sur la figure 5, le module de bridage 100 comprend en outre des anneaux de friction 120 agencés le pourtour du châssis 102 pour maintenir la courroie élastique en position sur le pourtour du châssis.

Le module de bridage 100 comprend également, et tel que représenté sur les figures 2 et 3, un serre-joint 130 formant des moyens de serrage final du module de bridage sur la pièce 10 à usiner. Ce serre-joint peut être de tout type connu. Il vise à sécuriser la fixation du module de bridage sur la pièce en bois.

Une fois le module de bridage fixé sur la pièce en bois, d'une part par l'actionnement des moyens de pré-serrage, puis d'autre part, par le serre-joint, le module d'usinage 200 peut être monté sur module de bridage 110.

Ce montage est réalisé par l'emboitement du châssis 220 du module de bridage dans le logement de réception 140 formé par l'épaulement 142 périphérique, visible sur la figure 1.

Une fois la platine 220 du module d'usinage logé dans le logement de réception 140, un opérateur peut actionner des taquets 144 pivotants de verrouillage, visibles sur la figure 5 et en transparence sur la figure 4. Ces taquets 144 de verrouillage sont montés sur le châssis 102 du module de bridage et sont configurés pour permettre de passer d'une première position dans laquelle le module d'usinage 200 peut être inséré librement dans le logement de réception 140 à une deuxième position dans laquelle les taquets pivotants de verrouillage 144 sont pivotés et assurent ainsi le placage du module d'usinage 200 contre le module de bridage 100 et empêchent ainsi le délogement du module d'usinage. En combinaison des moyens mécaniques d'encastrement de la partie inférieure de la platine dans l'épaulement 142 peuvent être prévus pour concourir au maintien du module d'usinage dans le module de bridage.

Le dispositif d'usinage peut alors être utilisé pour usiner la pièce 10 sur laquelle le dispositif est monté.

Un dispositif d'usinage selon l'invention peut également comprendre une toile de protection de la zone d'usinage, non représentée sur les figures. Une telle toile de protection est par exemple montée de part et d'autre de la zone d'usinage et reliée à des enrouleurs de manière à pouvoir fermer la zone d'usinage une fois le dispositif d'usinage monté sur la pièce en bois à usiner. Ces enrouleurs s'étendent par exemple le long des rails latéraux de coulissement des patins de guidage et sont reliés au châssis par des ailes latérales. Une fois le dispositif d'usinage fixé à la pièce en bois à usiner, l'opérateur peut tirer sur la toile de protection qui se déroule alors des enrouleurs pour venir couvrir la zone d'usinage. Il peut être prévu un enrouleur de chaque côté, les toiles de chaque enrouleur étant alors déployée jusqu'à la pièce en bois à usiner, ou il peut être prévu un seul enrouleur d'un côté du module qui permet de dérouler la toile de protection jusqu'à l'autre côté de la machine. Un moyen de blocage de la toile, tel qu'un crochet, peut alors être prévu pour maintenir la toile en position lors de l'usinage.

Bien entendu, l'invention ne se limite pas au seul mode de réalisation décrit en lien avec les figures, mais elle est définie par les revendications. En outre, d'autres moyens peuvent être prévus pour faciliter l'utilisation du dispositif selon l'invention. Par exemple le module de bridage et le module d'usinage peuvent chacun comprendre une ou plusieurs poignées de portage du module pour faciliter le déplacement et le positionnement du module par un opérateur.

## Revendications

1. Dispositif d'usinage portatif à commande numérique d'une pièce à usiner (10) comprenant un module d'usinage (200) comprenant :
- au moins une tête d'usinage portant un outil d'usinage,
- des moyens de déplacement de ladite tête d'usinage selon au moins deux axes perpendiculaires entre eux,
- une unité de commande numérique configurée pour pourvoir commander lesdits moyens de déplacement de ladite tête d'usinage,
**caractérisé en ce que** ledit dispositif d'usinage comprend en outre un module de bridage (100) dudit module d'usinage sur ladite pièce à usiner, ledit module de bridage (100) comprenant :
- des moyens de fixation amovible (106, 108, 130) dudit module de bridage (100) sur ladite pièce à usiner (10),
- des moyens de montage amovible (142, 144) dudit module d'usinage (200) sur ledit module de bridage (100).

2. Dispositif d'usinage selon la revendication 1, **caractérisé en ce que** ledit module de bridage (100) comprend un châssis (102) plan adapté pour pouvoir venir au moins partiellement en appui contre un chant de ladite pièce (10) à usiner, ledit châssis (102) comprenant en outre une ouverture centrale (104) destinée à permettre le passage de ladite tête d'usinage sur commande de ladite unité de commande numérique lorsque ledit module d'usinage (200) est monté sur ledit module de bridage (100).

3. Dispositif d'usinage selon la revendication 2, **caractérisé en ce que** lesdits moyens de fixation amovible (106, 108, 130) dudit module de bridage (100) sur ladite pièce (10) à usiner comprennent des moyens de serrage formés de moyens de positionnement et de pré-serrage (106, 108) du module de bridage sur la pièce à usiner et des moyens de serrage final (130) du module de bridage sur la pièce à usiner.

4. Dispositif d'usinage selon la revendication 3, **caractérisé en ce que** lesdits moyens de pré-serrage comprennent une mâchoire formée de deux tables (106, 108) s'étendant parallèlement l'une de l'autre, respectivement fixe et mobile par rapport audit châssis (102) du module de bridage, ladite table mobile (108) étant montée coulissante sur ledit châssis (102) et reliée à des moyens d'actionnement de ladite table mobile pour permettre son déplacement vers ladite table fixe en enserrant entre elles ladite pièce (10) à usiner.

5. Dispositif d'usinage selon la revendication 4, **caractérisé en ce que** lesdits moyens d'actionnement de ladite table mobile comprennent :
- des rainures latérales (110, 112) s'étendant de part et d'autre du châssis (102) du module de bridage (100),
- des patins de guidage (170, 172) linéaire portés par les extrémités latérales de ladite table mobile (108) et logés en coulissement dans lesdites rainures latérales (110, 112),
- une courroie (114) reliant chacun des deux patins de guidage (170, 172) à une poignée de manœuvre (116) portée par ledit châssis (102) et configurée pour pouvoir passer d'une première position dans laquelle ladite courroie (114) s'étend de manière à maintenir ladite table mobile (108) à une distance prédéterminée de ladite table fixe (106), à au moins une deuxième position dans laquelle ladite courroie (114) exerce sur ladite table mobile (108) une action de traction vers ladite table fixe (106) de manière à pouvoir enserrer ladite pièce (10) à usiner entre lesdites tables fixe (106) et mobile (108).

6. Dispositif d'usinage selon la revendication 5, **caractérisé en ce que** :
- ladite poignée de manœuvre (116) est montée mobile en rotation sur ledit châssis (102) selon un axe perpendiculaire audit châssis (102),
- ladite courroie (114) est une courroie élastique qui relie chaque patin de guidage (170, 172) et ladite poignée de manœuvre (116), en passant par une poulie de renvoi (118) solidaire dudit châssis (102) et présentant un axe parallèle et distant de l'axe de rotation de ladite poignée de manœuvre (116).

7. Dispositif d'usinage selon la revendication 6, **caractérisé en ce que** ledit module de bridage comprend en outre des pièces de friction (120) logées sur le pourtour dudit châssis (102) qui enserrent ladite courroie élastique (114).

8. Dispositif d'usinage selon l'une des revendications 3 à 7, **caractérisé en ce que** lesdits moyens de serrage final comprennent au moins un serre-joint (130) configuré pour pouvoir s'étendre de part et d'autre de ladite pièce (10) à usiner, une fois le module de bridage (100) fixé sur ladite pièce (10) à usiner, en exerçant des forces opposées sur lesdites tables fixe (106) et mobile (108) des moyens de pré-serrage.

9. Dispositif d'usinage selon l'une des revendications 1 à 8, **caractérisé en ce qu'**il comprend en outre des moyens de référencement dudit dispositif d'usinage par rapport à ladite pièce (10) à usiner.

10. Dispositif d'usinage selon la revendication 9, **caractérisé en ce que** les moyens de référencement comprennent une fenêtre de visualisation (150) équipée d'un repère (152) destiné à être positionné par un opérateur en regard d'un repère visuel (12) marqué sur ladite pièce (10) à usiner.

11. Dispositif d'usinage selon la revendication 10, **caractérisé en ce que** ladite fenêtre de visualisation (150) est portée par la table fixe (106) des moyens de pré-serrage.

12. Dispositif d'usinage selon l'une des revendications 1 à 11, **caractérisé en ce que** lesdits moyens de montage amovible dudit module d'usinage sur ledit module de bridage comprennent :
- un épaulement périphérique (142) ménagé sur ledit module de bridage (100) conformé au pourtour du module d'usinage de manière à former un logement de réception (140) dudit module d'usinage,
- des taquets pivotants de verrouillage (144) montés sur ledit module de bridage (100) et configurés pour pouvoir passer d'une première position dans laquelle le module d'usinage (200) peut être inséré librement dans ledit logement de réception (140) formé par ledit épaulement périphérique (142) à une deuxième position dans laquelle les taquets pivotants de verrouillage (144) sont pivotés et assurent le placage dudit module d'usinage (200) contre ledit module de bridage (100) et empêchent le délogement dudit module d'usinage (200).

13. Dispositif d'usinage selon l'une des revendication 1 à 12, **caractérisé en ce que** ladite pièce (10) à usiner est une pièce en bois.

## Patentansprüche

1. Tragbare, digital gesteuerte Werkstück-Bearbeitungsvorrichtung (10), mit einem Bearbeitungsmodul (200), das umfasst:
- mindestens einen Bearbeitungskopf, der ein Bearbeitungswerkzeug trägt,
- Bewegungsmittel für den Bearbeitungskopf entlang von mindestens zwei senkrecht zueinanderstehenden Achsen;
- eine digitale Steuereinheit, die konfiguriert ist, die Bewegungsmittel für den Bearbeitungskopf zu steuern,
**dadurch gekennzeichnet, dass** die Bearbeitungsvorrichtung zudem ein Modul zum Einspannen (100) des Bearbeitungsmoduls an dem Werkstück umfasst, worin das Einspannmodul (100) umfasst:
- Mittel zum abnehmbaren Befestigen (106, 108, 130) des Einspannmoduls (100) am Werkstück (10),
- Mittel zur abnehmbaren Montage (142, 144) des Bearbeitungsmoduls (200) an dem Einspannmodul (100).

2. Bearbeitungsvorrichtung nach Anspruch 1, **dadurch gekennzeichnet, dass** das Einspannmodul (100) einen flachen Rahmen (102) umfasst, der geeignet ist, zumindest teilweise an einer Kante des Werkstücks (10) anzuliegen, worin der Rahmen (102) zudem eine zentrale Öffnung (104) umfasst, die dazu bestimmt ist, den Durchgang des von der digitalen Steuereinheit gesteuerten Bearbeitungskopfes zu ermöglichen, wenn das Bearbeitungsmodul (200) auf dem Einspannmodul (100) montiert ist.

3. Bearbeitungsvorrichtung nach Anspruch 2, **dadurch gekennzeichnet, dass** die Mittel zum lösbaren Befestigen (106, 108, 130) des Einspannmoduls (100) am Werkstück (10) Spannmittel umfassen, die durch Anordnungs- und Vorspannmittel (106, 108) des Einspannmoduls am Werkstück und Mittel zum endgültigen Spannen (130) des Einspannmoduls am Werkstück gebildet werden.

4. Bearbeitungsvorrichtung nach Anspruch 3, **dadurch gekennzeichnet, dass** die Vorspannmittel eine Klemmbacke umfassen, die aus zwei sich parallel zueinander erstreckenden Tischen (106, 108) gebildet wird, die in Bezug auf den Rahmen (102) des Einspannmoduls bewegbar bzw. fest sind, worin der bewegbare Tisch (108) verschiebbar auf dem Rahmen (102) montiert und mit Betätigungsmitteln für den bewegbaren Tisch verbunden ist, um seine Bewegung in Richtung des festen Tisches zu ermöglichen, während das Werkstück (10) zwischen ihnen eingespannt wird.

5. Bearbeitungsvorrichtung nach Anspruch 4, **dadurch gekennzeichnet, dass** die Betätigungsmittel für den bewegbaren Tisch umfassen:
- seitliche Nuten (110, 112), die sich auf beiden Seiten des Rahmens (102) des Einspannmoduls (100) erstrecken,
- lineare Führungsschuhe (170, 172), die von den seitlichen Enden des bewegbaren Tisches (108) getragen werden und in den seitlichen Nuten (110, 112) gleitend gelagert sind,
- einen Riemen (114), der jeden der beiden Führungsschuhe (170, 172) mit einem Betätigungsgriff (116) verbindet, der von dem Rahmen (102) getragen wird und ausgestaltet ist, von einer ersten Position, in der sich der Riemen (114) so erstreckt, dass er den bewegbaren Tisch (108) in einem bestimmten Abstand von dem festen Tisch (106) hält, in mindestens eine zweite Position bewegt zu werden, in der der Riemen (114) auf den bewegbaren Tisch (108) eine Wirkung ausübt, die ihn in Richtung des festen Tisches (106) zieht, so dass das Werkstück (10) zwischen dem festen (106) und dem bewegbaren (108) Tisch geklemmt werden kann.

6. Bearbeitungsvorrichtung nach Anspruch 5, **dadurch gekennzeichnet, dass**:
- der Betätigungsgriff (116) auf dem Rahmen (102) entlang einer zum Rahmen (102) senkrechten Achse drehbar montiert ist,
- der Riemen (114) ein elastischer Riemen ist, der jeden Führungsschuh (170, 172) und den Betätigungsgriff (116) verbindet und durch eine Umlenkrolle (118) läuft, die fest mit dem Rahmen (102) verbunden ist und eine Achse aufweist, die parallel zur Drehachse des Betätigungsgriffs (116) verläuft und von ihr entfernt ist.

7. Bearbeitungsvorrichtung nach Anspruch 6, **dadurch gekennzeichnet, dass** das Einspannmodul zudem Reibstücke (120) umfasst, die am Umfang des Rahmens (102) angeordnet sind und den elastischen Riemen (114) umschließen.

8. Bearbeitungsvorrichtung nach einem der Ansprüche 3 bis 7, **dadurch gekennzeichnet, dass** die Mittel zum endgültigen Spannen mindestens eine Klemme (130) umfassen, die ausgestaltet ist, sich nach der Befestigung des Einspannmoduls (100) am Werkstück (10) auf beiden Seiten des Werkstücks (10) auszudehnen, indem diese entgegengesetzte Kräfte auf den festen (106) und den bewegbaren (108) Tisch der Vorspannmittel ausübt.

9. Bearbeitungsvorrichtung nach einem der Ansprüche 1 bis 8, **dadurch gekennzeichnet, dass** diese zudem Referenzierungsmittel für die Bearbeitungsvorrichtung in Bezug auf das Werkstück (10) umfasst.

10. Bearbeitungsvorrichtung nach Anspruch 9, **dadurch gekennzeichnet, dass** die Referenzierungsmittel ein Sichtfenster (150) umfassen, das mit einer Markierung (152) versehen ist, die von einem Bediener gegenüber einer optischen Markierung (12) auf dem Werkstück (10) angeordnet werden soll.

11. Bearbeitungsvorrichtung nach Anspruch 10, **dadurch gekennzeichnet, dass** das Sichtfenster (150) von dem festen Tisch (106) der Vorspannmittel getragen wird.

12. Bearbeitungsvorrichtung nach einem der Ansprüche 1 bis 11, **dadurch gekennzeichnet, dass** die Mittel zur abnehmbaren Befestigung des Bearbeitungsmoduls an dem Einspannmodul umfassen:
- eine am Einspannmodul (100) vorgesehene Umfangsschulter (142), die um den Umfang des Bearbeitungsmoduls herum so geformt ist, dass sie ein Gehäuse zur Aufnahme (140) des Bearbeitungsmoduls bildet,
- schwenkbare Verriegelungslaschen (144), die an dem Einspannmodul (100) montiert und ausgestaltet sind, von einer ersten Position, in der das Bearbeitungsmodul (200) frei in das von der Umfangsschulter (142) gebildete Aufnahmegehäuse (140) eingesetzt werden kann, in eine zweite Position bewegt zu werden, in der die schwenkbaren Verriegelungslaschen (144) geschwenkt sind und für das Einspannen des Bearbeitungsmoduls (200) gegen das Einspannmodul (100) sorgen und verhindern, dass sich das Bearbeitungsmodul (200) verschiebt.

13. Bearbeitungsvorrichtung nach einem der Ansprüche 1 bis 12, **dadurch gekennzeichnet, dass** das Werkstück (10) ein Holzwerkstoff ist.

## Claims

1. A portable digitally controlled device for machining a workpiece (10), comprising a machining module (200) which comprises:
- at least one machining head bearing a machining tool,
- means for moving the machining head along at least two axes perpendicular to each other;
- a digital control unit configured to be able to control the means for moving the machining head,
**characterized in that** the machining device further comprises a module for clamping (100) the machining module to the workpiece, the clamping module (100) comprising :
- means for removably attaching (106, 108, 130) the clamping module (100) to the workpiece (10),
- means for removably mounting (142, 144) the machining module (200) to the clamping module (100).

2. The machining device according to claim 1, **characterized in that** the clamping module (100) comprises a flat frame (102) adapted to be able to come at least partially to bear against an edge of the workpiece (10), the frame (102) further comprising a central opening (104) intended to allow the passage of the machining head under the control of the digital control unit when the machining module (200) is mounted on the clamping module (100)

3. The machining device according to claim 2, **characterized in that** the means for removably attaching (106, 108, 130) the clamping module (100) to the workpiece (10) comprise tightening means formed by means for positioning and pre-tightening (106, 108) the clamping module onto the workpiece and means for final tightening (130) of the clamping module onto the workpiece.

4. The machining device according to claim 3, **characterized in that** the pre-tightening means comprise a jaw formed by two tables (106, 108) extending parallel to each other, respectively fixed and mobile relative to the frame (102) of the clamping module, the mobile table (108) being slidably mounted on the frame (102) and connected to means for actuating the mobile table to allow its movement towards the fixed table while clamping the workpiece (10) between them.

5. The machining device according to claim 4, **characterized in that** the means for actuating the mobile table comprise:
- lateral grooves (110, 112) extending on both sides of the frame (102) of the clamping module (100),
- linear guide shoes (170, 172) carried by the lateral ends of the mobile table (108) and slidably housed in the lateral grooves (110, 112),
- a belt (114) connecting each of the two guide shoes (170, 172) to an operating handle (116) carried by the frame (102) and configured to be movable from a first position wherein the belt (114) extends so as to hold the mobile table (108) at a predetermined distance from the fixed table (106) to at least a second position wherein the belt (114) exerts on the mobile table (108) an action pulling it towards the fixed table (106) so as to be able to clamp the workpiece (10) between the fixed (106) and mobile (108) tables.

6. The machining device according to claim 5, **characterized in that**:
- the operating handle (116) is rotatably mounted on the frame (102) along an axis perpendicular to the frame (102),
- the belt (114) is an elastic belt that connects each guide shoe (170, 172) and the operating handle (116), passing through a return pulley (118) integral with the frame (102) and having an axis parallel to and distant from the axis of rotation of the operating handle (116).

7. The machining device according to claim 6, **characterized in that** the clamping module further comprises friction pieces (120) housed on the perimeter of the frame (102) which enclose the elastic belt (114).

8. The machining device according to one of claims 3 to 7, **characterized in that** the final tightening means comprise at least one clamp (130) configured to be able to extend on either side of the workpiece (10), once the clamping module (100) has been fixed to the workpiece (10), by exerting opposing forces on the fixed (106) and mobile (108) tables of the pre-tightening means.

9. The machining device according to one of claims 1 to 8, **characterized in that** it further comprises means for referencing the machining device with respect to the workpiece (10).

10. The machining device according to claim 9, **characterized in that** the referencing means comprise a viewing window (150) equipped with a marker (152) intended to be positioned by an operator opposite a visual marker (12) on the workpiece (10).

11. The machining device according to claim 10, **characterized in that** the viewing window (150) is carried by the fixed table (106) of the pre-tightening means.

12. The machining device according to any of claims 1 to 11, **characterized in that** the means for removably mounting the machining module to the clamping module comprises:
- a peripheral shoulder (142) provided on the clamping module (100) shaped around the perimeter of the machining module so as to form a housing for receiving (140) the machining module,
- pivoting locking tabs (144) mounted on the clamping module (100) and configured to be movable from a first position wherein the machining module (200) is freely insertable into the receiving housing (140) formed by the peripheral shoulder (142) to a second position wherein the pivoting locking tabs (144) are pivoted and provide for the clamping of the machining module (200) against the clamping module (100) and prevent the machining module (200) from becoming dislodged.

13. The machining device according to one of claims 1 to 12, **characterized in that** the workpiece (10) is a wooden workpiece.
